# EUROPÄISCHE PATENTSCHRIFT

(11) **EP 2 874 516 B1**
(45) Veröffentlichungstag und Bekanntmachung des Hinweises auf die Patenterteilung: **18.01.2017**
(21) Anmeldenummer: 13765284.8
(22) Anmeldetag: 19.07.2013
(51) Int. Cl.: A47B 5/04, A47B 46/00

(54) **RAUMTEILER**
ROOM DIVIDER
PANNEAU DE SÉPARATION

(30) Priorität: 19.07.2012 DE 202012102705 U
(43) Veröffentlichungstag der Anmeldung: 27.05.2015
(73) Patentinhaber: Mobica Ltd., Mohandessin (EG)
(72) Erfinder: FAROUK, Mohammed, EG 0000 Mohandessin (EG)
(74) Vertreter: Lösch, Christoph Ludwig Klaus
(86) Internationale Anmeldenummer: PCT/DE2013/100270
(87) Internationale Veröffentlichungsnummer: WO 2014/012537

(56) Entgegenhaltungen:
- US-A- 1 315 913
- US-A- 1 498 319
- US-A- 2 594 262

## Beschreibung

Die Erfindung betrifft einen Raumteiler.

Raumteiler dienen der individuellen und flexiblen Unterteilung von großen Räumen. Beispielsweise werden Raumteiler in Büros, insbesondere in Großraumbüros, zur Abgrenzung von den jeweiligen Büroarbeitsplätzen zueinander eingesetzt. Auf diese Weise kann ein Sicht- und Lärmschutz und/oder eine Abschirmung von ähnlichen Umgebungseinflüssen (z.B. Lichteinwirkung, Luftzug) erfolgen.

Ein solcher Raumteiler ist z.B. aus US 1 498 319 A bekannt.

Der Erfindung liegt die Aufgabe zugrunde, einen variabel einsetzbaren und multifunktionalen Raumteiler anzubieten.

Diese Aufgabe wird durch einen Raumteiler mit den Merkmalen des Schutzanspruchs 1 gelöst. Vorteilhafte Ausführungsformen sind in den Unteransprüchen beschrieben.

Der erfindungsgemäße Raumteiler weist einen Grundrahmen mit Quertraversen und Längstraversen, mindestens eine Klappe, mindestens einen Stützarm und mindestens ein feststehendes Blendenelement auf. Die Längstraversen besitzen jeweils ein mit einer Längsnut versehenes Profilelement. Die Klappe überspannt den Grundrahmen parallel zu den Quertraversen und ist um eine Schwenkachse schwenkbar gelagert. Der Stützarm ist mit einem ersten Endbereich verschiebbar in der Längsnut des Profilelements der Längstraverse und mit einem zweiten Endbereich mit der Klappe verbunden. Das feststehende Blendenelement überspannt den Grundrahmen in einem Bereich, der nicht durch die Klappe verschließbar ist. Durch die schwenkbare Klappe können Teilbereiche des Raumteilers geöffnet werden und auf diese Weise weitere Elemente, die im Inneren des Raumteilers angeordnet sind, zugänglich gemacht werden. Damit erhöht sich die Funktionalität des Raumteilers. Der Stützarm sorgt für eine stabile Lagerung der Klappe und ermöglicht ein einfaches Schwenken der Klappe zwischen der geöffneten und der geschlossenen Stellung.

Der Raumteiler weist weiterhin rückseitig mindestens eine Rückseitenklappe, welche deckungs- und größengleich zu einer Klappe auf der Vorderseite ausgebildet ist, und einen Rückseitenstützarm, welcher mit einem ersten Endbereich verschiebbar in einer Rückseitenlängsnut der Längstraverse und mit einem zweiten Endbereich mit der Rückseitenklappe verbunden ist, auf.

Der Raumteiler weist somit sowohl auf der Vorderseite als auch auf der Rückseite mindestens eine Klappe auf. Dadurch kann der Raumteiler beidseitig genutzt werden. Außerdem wird durch die deckungs- und größengleiche Anordnung der Klappen eine Interaktion zwischen dem Benutzer auf der Vorderseite und dem Benutzer auf der Rückseite des Raumteilers ermöglicht: Bei geöffneten Klappen kann beispielsweise Sichtkontakt hergestellt werden.

In einer vorteilhaften Ausführungsform weist der Raumteiler ferner Rollen zum Verfahren auf. Damit wird die Mobilität des Raumteilers erhöht und er kann schnell und unkompliziert zwischen verschiedenen Einsatzorten transportiert werden.

In einer weiteren vorteilhaften Ausführungsform weist der Raumteiler ein Beleuchtungselement auf. In besonders vorteilhafter Weise ist das Beleuchtungselement hierbei derart angeordnet, dass es den Grundrahmen parallel zu den Quertraversen überspannt. Ist das Beleuchtungselement ferner oberhalb der Klappe angebracht, so kann eine besonders vorteilhafte Ausleuchtung der Klappe erfolgen, was die Einsatzmöglichkeiten und den Arbeitskomfort erhöht.

In einer bevorzugten Ausführungsform ist die Klappe als Büroarbeitsfläche ausgebildet. Dadurch übernimmt der Raumteiler zusätzlich die Funktion eines vollwertigen Büroarbeitsplatzes. Die Multifunktionalität des Raumteilers wird damit weiter erhöht. Ist die Klappe ausgeklappt, so kann diese beispielsweise als Schreibablage oder als Computertisch dienen. Bei Nichtbenutzen des Arbeitsplattes kann die Klappe geschlossen werden und der Raumteiler kann platzsparend verstaut werden.

Sind mehrere Klappen vorhanden, so kann eine Klappe als Büroarbeitsfläche ausgebildet sein und eine weitere, weiter oben angeordnete Klappe kann als Ablagefläche, z.B. zur Ablage von Büchern und/oder Büroordnern, dienen. In einer derartigen Ausführungsform weist die als Büroarbeitsfläche dienende Klappe in bevorzugter Weise eine größere Breite als die als Ablagefläche dienende Klappe auf.

In einer weiteren bevorzugten Ausführungsform weist der Raumteiler ferner ein quer zu den Quertraversen und innerhalb des durch den Grundrahmen begrenzten Raumvolumens angeordnetes Ablagefach und/oder Tafelelement auf. Das Tafelelement kann insbesondere als Magnettafel oder Pinnwand ausgebildet sein. Das Ablagefach kann beispielsweise mit Ablageschalen ausgerüstet sein. Durch das Vorsehen der oben genannten zusätzlichen Elemente erhöht sich die Multifunktionalität zusätzlich.

In einer weiteren vorteilhaften Ausführungsform weist der Raumteiler ferner eine Anschlusskonsole mit einer Mehrzahl von Verbindungseinrichtungen zur Herstellung einer Verbindung zu elektrischen und/oder kommunikationstechnischen Leitungen auf. Auch ist in bevorzugter Weise ein integriertes Verlängerungskabel vorhanden. Auf diese Weise stehen am Raumteiler eine Vielzahl von elektrischen und kommunikationstechnischen Anschlussmöglichkeiten (z.B. LAN, Telefon,...) zur Verfügung.

Die Erfindung ist anhand von Ausführungsbeispielen in den Zeichnungsfiguren weiter erläutert. Es zeigen, jeweils schematisch,
- Fig. 1: eine perspektivische Ansicht einer ersten Ausführungsform mit geöffneten Klappen;
- Fig. 2: eine Seitenansicht des Raumteilers aus Fig. 1;
- Fig. 3: eine perspektivische Ansicht des Raumteilers mit geschlossenen Klappen;
- Fig. 4: eine Seitenansicht des Raumteilers aus Fig. 3;
- Fig. 5: eine Schnittansicht des Raumteilers aus Fig. 1;
- Fig. 6: ein vergrößerter Ausschnitt des Bereichs C der Fig. 5;
- Fig. 7: eine Schnittansicht des Raumteilers aus Fig. 3;
- Fig. 8: ein vergrößerter Ausschnitt des Bereichs B der Fig. 7;
- Fig. 9: eine perspektivische Ansicht einer zweiten Ausführungsform mit geöffneten Klappen;
- Fig. 10: eine Seitenansicht des Raumteilers aus Fig. 9;
- Fig. 11: eine Explosionsdarstellung des Raumteilers aus Fig. 9; und

- Fig. 12: mehrere Raumteiler in einer Aufbewahrungsposition.

Gleiche bzw. gleichwirkende Teile sind in den einzelnen Zeichnungsfiguren mit den gleichen Bezugszeichen versehen.

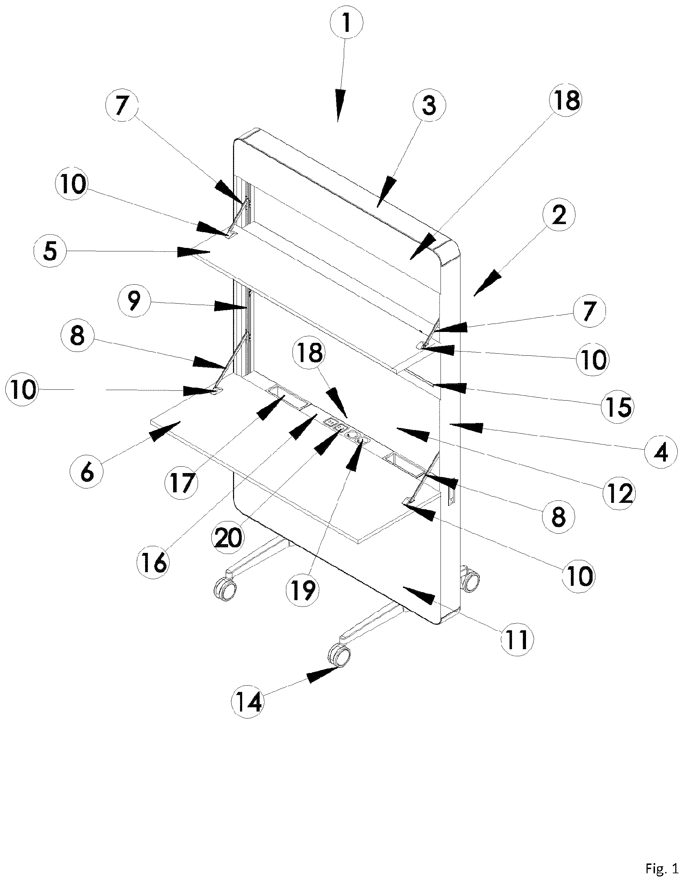

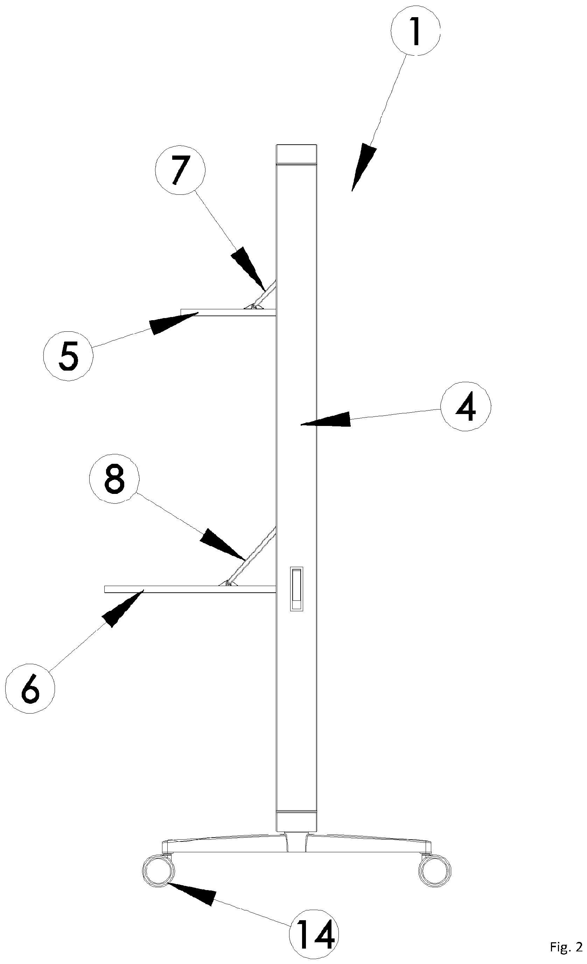

Fig. 1 bis Fig. 8 zeigen eine erste Ausführungsform. Der Raumteiler 1 besitzt einen Grundrahmen 2. Der Grundrahmen 2 besteht aus Quertraversen 3 und Längstraversen 4. Ferner besitzt der Raumteiler 1 zwei Klappen 5 und 6. Die Klappen 5, 6 überspannen den Grundrahmen 2 parallel zu den Quertraversen 3 und sind jeweils um eine Schwenkachse drehbar gelagert. Jede der Klappen 5, 6 wird durch jeweils zwei Stützarme 7, 8 abgestützt. Beide Klappen 5, 6 befinden sich auf der Vorderseite des Raumteilers 1. Die Klappe 5 besitzt eine kleinere Breite als die Klappe 6 und ist oberhalb der Klappe 6 angeordnet. Die Klappe 5 ist als Ablagefläche ausgebildet und die Klappe 5 ist als Büroarbeitsfläche ausgebildet.

Ein erster Endbereich der Stützarme 7, 8 ist jeweils in ein mit einer Längsnut versehenes Profilelement 9 der Längstraverse 4 verschiebbar gelagert. Der zweite Endbereich der Stützarme 7, 8 ist durch eine Verbindungsvorrichtung 10 mit der Klappe 5 bzw. 6 verbunden.

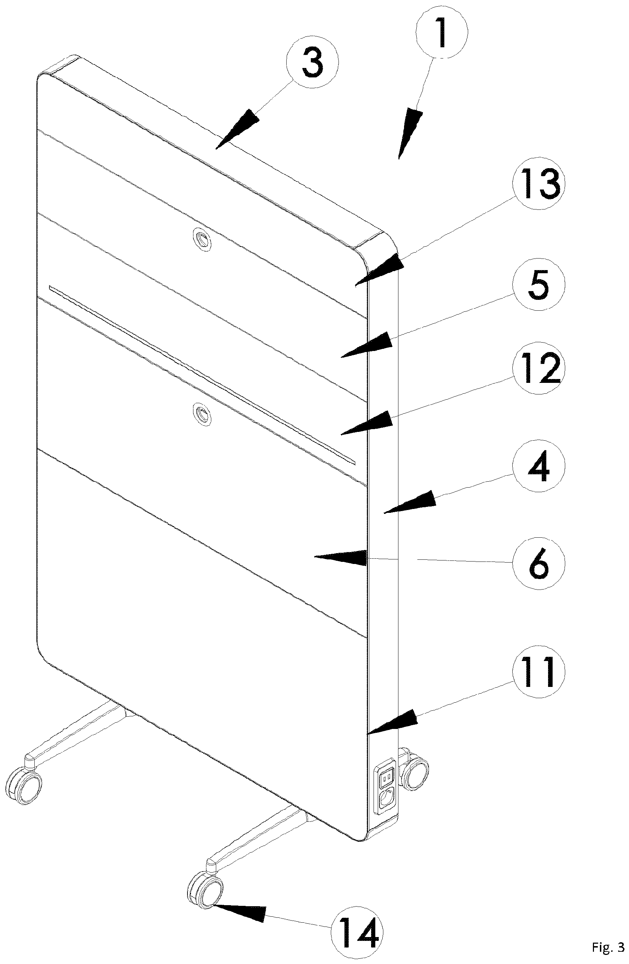

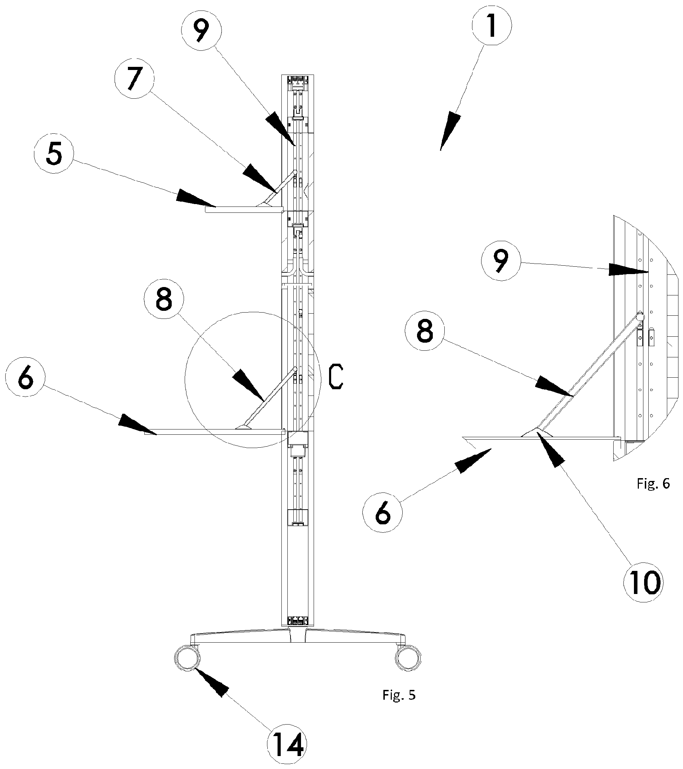

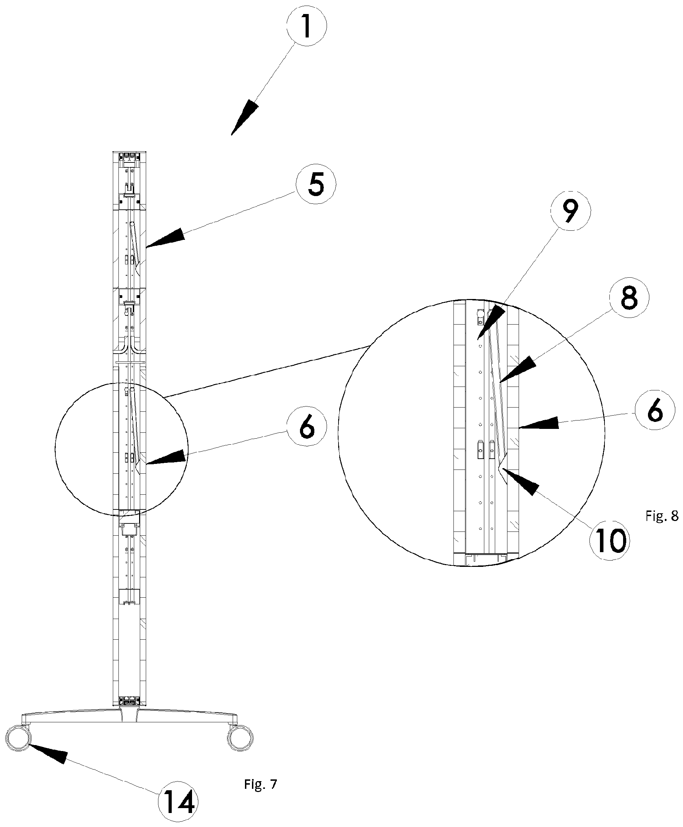

Die Klappen 5, 6 sind jeweils um ihre Schwenkachse schwenkbar. Hierbei verfahren die Stützarme innerhalb der Längsnut des Profilelements 9 und die jeweilige Klappe 5, 6 wird entweder in eine geschlossenen oder ein geöffnete Stellung gebracht. Fig. 1, Fig. 2, Fig. 5 und Fig. 6 zeigen den Raumteiler 1 mit geöffneten Klappen 5, 6 und Fig. 3, Fig. 4, Fig. 7 und Fig. 8 zeigen den Raumteiler 1 mit geschlossenen Klappen 5, 6. Die Verfahrbarkeit der Stützarme 7, 8 in der Längsnut des Profilelements 9 ist insbesondere aus den vergrößerten Darstellung der Fig. 6 und Fig. 8 ersichtlich.

Die feststehenden Blendenelemente 11, 12 und 13 überspannen den Grundrahmen 2 in Bereichen, die nicht durch die Klappen 5, 6 verschließbar sind. Der Grundrahmen 2 ist auf Rollen 14 gelagert, sodass der Raumteiler 1 verfahrbar ist.

Ein Beleuchtungselement 15 überspannt den Grundrahmen 2 parallel zu den Quertraversen 3 und ist zwischen der Klappe 5 und der Klappe 6 positioniert.

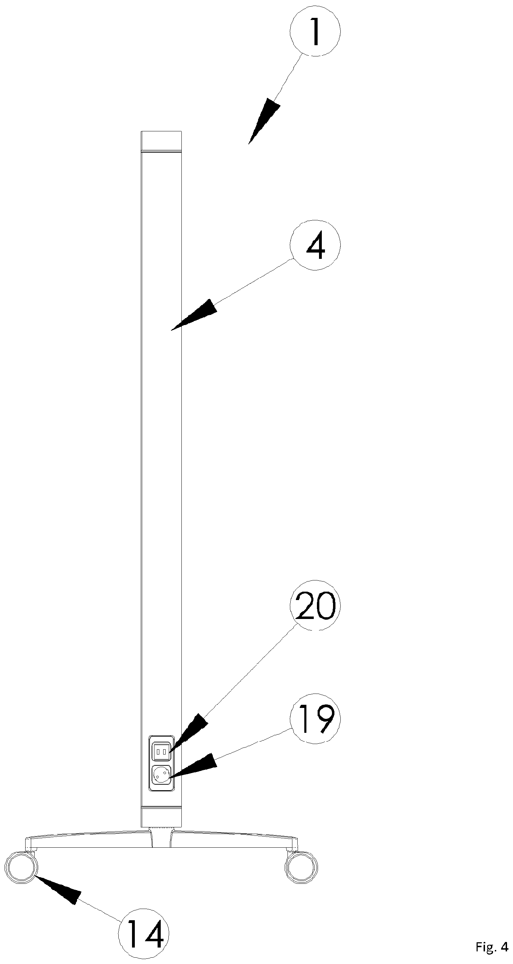

Im Bereich der Schwenkachse der Klappe 6 überspannt ein Ablagefach 16 den Grundrahmen 2 parallel zu den Quertraversen 3. Das Ablagefach 16 ist mit zwei Ablageschalen 17 und einer Anschlusskonsole 18 ausgerüstet. Die Anschlusskonsole 18 weist zwei Steckdosen 19 und zwei Netzwerkdosen 20 auf. Seitlich am Grundrahmen 2 sind eine weitere Steckdose 19 und eine weitere Netzwerkdose 20 angebracht (Fig. 4).

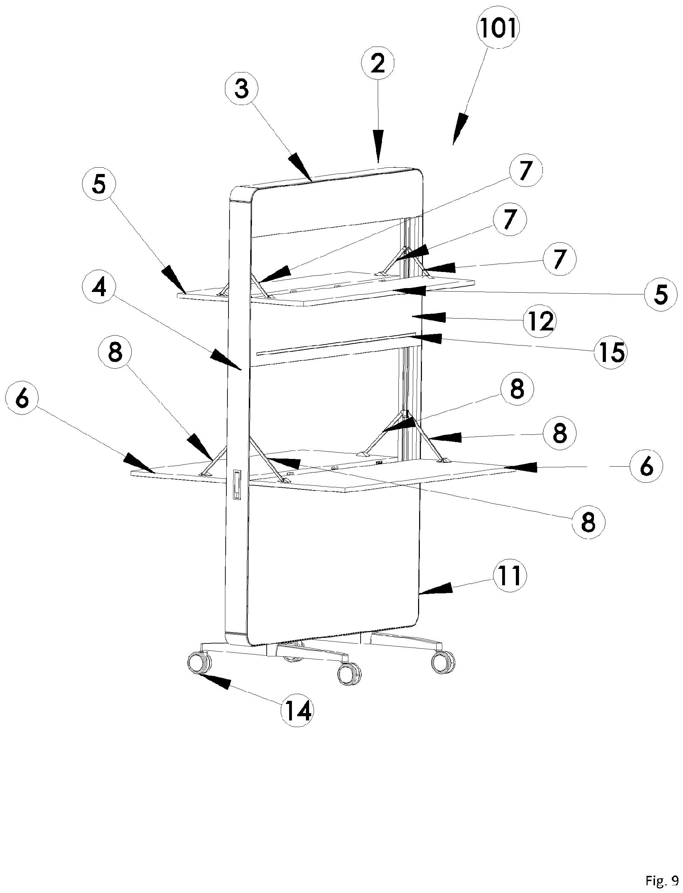

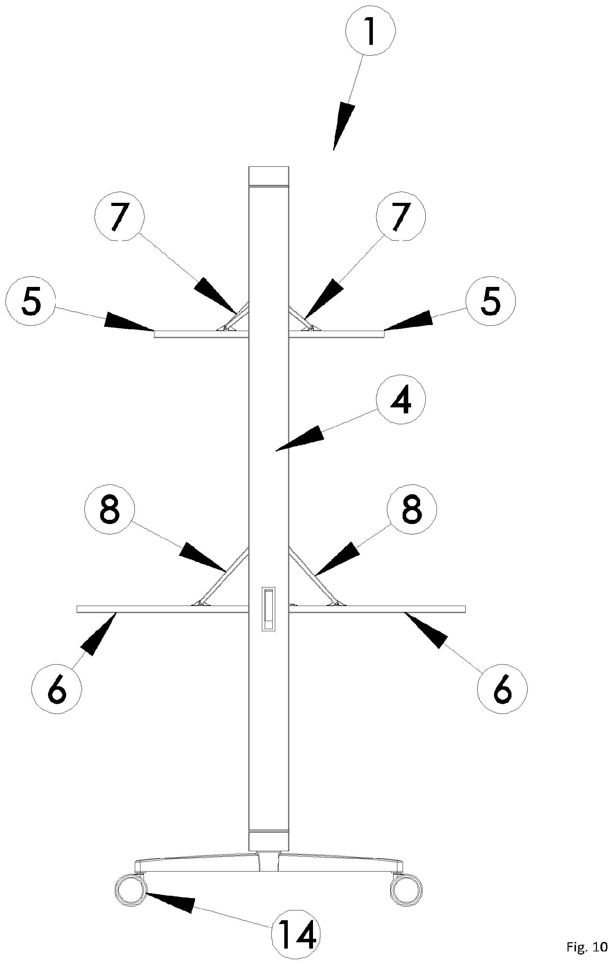

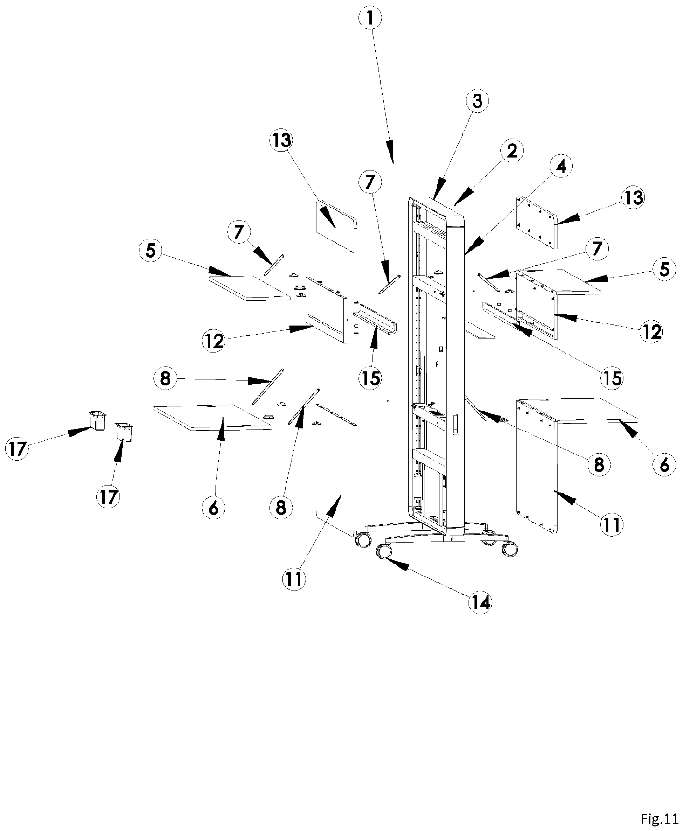

Fig. 9 bis Fig. 11 zeigt eine zweite Ausführungsform. Der dort gezeigte Raumteiler 101 unterscheidet sich von dem Raumteiler 1 der vorhergehenden Ausführungsform insbesondere dadurch, dass der Raumteiler 101 sowohl auf der Vorderseite als auch auf der Rückseite jeweils zwei, deckungs- und größengleich zueinander ausgebildete Klappen aufweist.

Der Raumteiler 101 besitzt einen Grundrahmen 2. Der Grundrahmen 2 besteht aus Quertraversen 3 und Längstraversen 4. Ferner besitzt der Raumteiler 101 insgesamt vier Klappen, nämlich zwei Klappen 5 und zwei Klappen 6. Die Klappen 5, 6 überspannen den Grundrahmen 2 parallel zu den Quertraversen 3 und sind jeweils um eine Schwenkachse drehbar gelagert. Jede der Klappen 5, 6 wird durch jeweils zwei Stützarme 7, 8 abgestützt. Jeweils eine Klappe 5 und eine Klappe 6 befinden sich auf der Vorderseite und der Rückseite des Raumteilers 101. Die Klappen 5 besitzen eine kleinere Breite als die Klappen 6 und sind jeweils oberhalb der Klappen 6 angeordnet. Die Klappen 5 sind als Ablageflächen ausgebildet und die Klappen 5 sind als Büroarbeitsflächen ausgebildet.

Die beiden Klappen 5 und die beiden Klappen 6 sind jeweils deckungs- und größengleich zueinander ausgebildet, wobei jeweils eine Klappe 5, 6 auf der Rückseite und die andere Klappe 5 bzw. 6 auf der Vorderseite angeordnet ist.

Das Profilelement 9 der Längstraverse 4 weist insgesamt zwei parallel zueinander angeordnete Längsnuten auf. Die den Klappen 5, 6 der Vorderseite zugeordneten Stützarme 7, 8 sind in der ersten Längsnut verschiebbar gelagert und die den Klappen 5, 6 der Rückseite zugeordneten Stützarme 7, 8 sind in der zweiten Längsnut verschiebbar gelagert.

Fig. 12 zeigt mehrere Raumteiler 1 in einer Aufbewahrungsposition. Jeder der in Fig. 12 dargestellten Raumteiler 1 besitzt einen Grundrahmen 2. An diesem sind die Klappen 5,6, die Blendenelemente 11, 12, 13 sowie die Rollen 14 und das Beleuchtungselement 15 angebracht. Das Fahrgestell eines jeden Raumteils, das insbesondere die Rollen 14 und Auslegerfüße umfasst, ist derart ausgebildet, dass mehrere Raumteiler im Versatz um eine Fußbreite miteinander gestaffelt, d.h. eng, aufgestellt werden können. Mit anderen Worten sind die Raumteiler 1 ineinanderschiebbar. Dadurch wird eine platzsparende Lagerung bzw. Aufbewahrung ermöglicht.

### BEZUGSZEICHENLISTE

- 1, 101: Raumteiler
- 2: Grundrahmen
- 3: Quertraverse
- 4: Längstraverse
- 5, 6: Klappe
- 7, 8: Stützarm
- 9: Profilelement
- 10: Verbindungsvorrichtung
- 11, 12, 13: Blendenelement
- 14: Rollen
- 15: Beleuchtungselement
- 16: Ablagefach
- 17: Ablageschale
- 18: Anschlusskonsole
- 19: Steckdose
- 20: Netzwerkdose

## Patentansprüche

1. Raumteiler (101), aufweisend:
- einen Grundrahmen (2) mit Quertraversen (3) und Längstraversen (4), wobei die Längstraversen (4) jeweils ein mit einer Längsnut versehenes Profilelement (9) besitzen;
- mindestens eine Klappe (5, 6), welche den Grundrahmen (2) parallel zu den Quertraversen (3) überspannt und welche um eine Schwenkachse schwenkbar gelagert ist;
- mindestens einen Stützarm (7, 8), welcher mit einem ersten Endbereich verschiebbar in der Längsnut des Profilelements (9) der Längstraverse und mit einem zweiten Endbereich mit der Klappe (5, 6) verbunden ist; und
- mindestens ein feststehendes Blendenelement (11, 12, 13), welches den Grundrahmen (2) in einem Bereich, der nicht durch die Klappe (5, 6) verschließbar ist, überspannt;
**dadurch gekennzeichnet, dass** der Raumteiler (101) rückseitig mindestens eine Rückseitenklappe (5, 6), welche deckungs- und größengleich zu der Klappe (5, 6) ausgebildet ist, und mindestens einen Rückseitenstützarm (7, 8), welcher mit einem ersten Endbereich verschiebbar in einer Rückseitenlängsnut der Längstraverse (4) und mit einem zweiten Endbereich mit der Rückseitenklappe (5, 6) verbunden ist, aufweist, und
wobei der Raumteiler (101) vorderseitig zwei Klappen (5, 6) und rückseitig zwei, jeweils zu einer der Klappen (5, 6) deckungs- und größengleich ausgebildete Rückseitenklappen (5, 6) aufweist.

2. Raumteiler nach Anspruch 1, welcher ferner Rollen (14) zum Verfahren des Raumteilers (101) aufweist.

3. Raumteiler nach einem der Ansprüche 1 oder 2, welcher ferner ein Beleuchtungselement (15) aufweist, insbesondere ein Beleuchtungselement (15), welches den Grundrahmen parallel zu den Quertraversen (3) überspannt.

4. Raumteiler nach einem der vorhergehenden Ansprüche, wobei die Klappe (6) als Büroarbeitsfläche ausgebildet ist.

5. Raumteiler nach einem der vorhergehenden Ansprüche, welcher ferner ein quer zu den Quertraversen (3) und innerhalb des durch den Grundrahmen (2) begrenzten Raumvolumens angeordnetes Tafelelement, insbesondere eine Magnettafel oder Pinnwand, aufweist.

6. Raumteiler nach einem der vorhergehenden Ansprüche, welcher ferner ein quer zu den Quertraversen (3) und innerhalb des durch den Grundrahmen (2) begrenzten Raumvolumens angeordnetes Ablagefach (16) aufweist.

7. Raumteiler nach einem der vorhergehenden Ansprüche, welcher ferner eine Anschlusskonsole (18) mit einer Mehrzahl von Verbindungseinrichtungen zur Herstellung einer Verbindung zu elektrischen und/oder kommunikationstechnischen Leitungen aufweist.

8. Raumteiler nach einem der vorhergehenden Ansprüche, welcher ferner ein integriertes Verlängerungskabel aufweist.

9. Raumteiler nach einem der vorhergehenden Ansprüche, wobei der Raumteiler (101) staffelbar ist.

## Claims

1. Room divider (101), having:
- a base frame (2) with crossmembers (3) and longitudinal members (4), wherein the longitudinal members (4) in each case have a profile element (9) provided with a longitudinal groove;
- at least one flap (5, 6) which spans the base frame (2) parallel to the crossmembers (3) and which is pivotably mounted about a pivot axis;
- at least one support arm (7, 8) which is connected by a first end region so as to be displaceable in the longitudinal groove of the profile element (9) of the longitudinal member and which is connected by a second end region to the flap (5, 6); and
- at least one fixed screen element (11, 12, 13) which spans the base frame (2) in a region which cannot be closed by the flap (5, 6) ;
**characterized in that** the room divider (101) has on the rear side at least one rear-side flap (5, 6) which is designed to be congruent to and the same size as the flap (5, 6), and at least one rear-side support arm (7, 8) which is connected by a first end region so as to be displaceable in a rear-side longitudinal groove of the longitudinal member (4) and which is connected by a second end region to the rear-side flap (5, 6), and wherein the room divider (101) has two flaps (5, 6) on the front side and, on the rear side, two rear-side flaps (5, 6) which are in each case designed to be congruent to and the same size as one of the flaps (5, 6).

2. Room divider according to Claim 1, which also has rollers (14) for moving the room divider (101).

3. Room divider according to either of Claims 1 and 2, which also has a lighting element (15), in particular a lighting element (15) which spans the base frame parallel to the crossmembers (3).

4. Room divider according to one of the preceding claims, wherein the flap (6) is designed as an office work surface.

5. Room divider according to one of the preceding claims, which further has a board element, in particular a magnetic board or pinboard, arranged transversely with respect to the crossmembers (3) and within the spatial volume defined by the base frame (2).

6. Room divider according to one of the preceding claims, which also has a storage compartment (16) arranged transversely with respect to the crossmembers (3) and within the spatial volume defined by the base frame (2).

7. Room divider according to one of the preceding claims, which also has a connection console (18) with a plurality of connection facilities for producing a connection to electrical and/or communication lines.

8. Room divider according to one of the preceding claims, which also has an integrated extension cable.

9. Room divider according to one of the preceding claims, wherein the room divider (101) can be arranged in a staggered formation.

## Revendications

1. Panneau de séparation (101), présentant :
- un cadre de base (2) avec des traverses (3) et des longerons (4), les longerons (4) possédant chaque fois un élément profilé (9) pourvu d'une rainure longitudinale ;
- au moins un volet (5, 6) qui s'étend par-dessus le cadre de base (2) parallèlement aux traverses (3) et qui est supporté de manière à pouvoir pivoter autour d'un axe de pivotement ;
- au moins un bras de support (7, 8) qui est connecté par une première région d'extrémité de manière déplaçable dans la rainure longitudinale de l'élément profilé (9) du longeron et par une deuxième région d'extrémité au volet (5, 6) ; et
- au moins un élément de bandeau fixe (11, 12, 13) qui s'étend par-dessus le cadre de base (2) dans une région qui ne peut pas être fermée par le volet (5, 6) ;
**caractérisé en ce que** le panneau de séparation (101) présente au moins un volet du côté arrière (5, 6) qui est réalisé en affleurement et avec la même dimension que le volet (5, 6), et au moins un bras de support du côté arrière (7, 8) qui est connecté par une première région d'extrémité de manière déplaçable dans une rainure longitudinale du côté arrière du longeron (4) et par une deuxième région d'extrémité au volet du côté arrière (5, 6), et
le panneau de séparation (101) présentant du côté avant deux volets (5, 6) et du côté arrière deux volets de côtés arrière (5, 6) réalisés à chaque fois en affleurement et avec la même dimension que l'un des volets (5, 6).

2. Panneau de séparation selon la revendication 1, qui présente en outre des roulettes (14) pour le déplacement du panneau de séparation (101).

3. Panneau de séparation selon l'une quelconque des revendications 1 ou 2, présentant en outre un élément d'éclairage (15), en particulier un élément d'éclairage (15) qui s'étend par-dessus le cadre de base parallèlement aux traverses (3).

4. Panneau de séparation selon l'une quelconque des revendications précédentes, dans lequel le volet (6) est réalisé sous forme de surface de travail de bureau.

5. Panneau de séparation selon l'une quelconque des revendications précédentes, présentant en outre un élément de tableau, en particulier un tableau magnétique ou un tableau d'affichage disposé transversalement aux traverses (3) et à l'intérieur du volume de l'espace limité par le cadre de base (2).

6. Panneau de séparation selon l'une quelconque des revendications précédentes, présentant en outre un compartiment de rangement (16) disposé transversalement aux traverses (3) et à l'intérieur du volume de l'espace délimité par le cadre de base (2).

7. Panneau de séparation selon l'une quelconque des revendications précédentes, présentant en outre une console de raccordement (18) avec une pluralité de dispositifs de connexion pour établir une connexion à des lignes électriques et/ou de technique de communication.

8. Panneau de séparation selon l'une quelconque des revendications précédentes, présentant en outre un câble de rallonge intégré.

9. Panneau de séparation selon l'une quelconque des revendications précédentes, le panneau de séparation (101) étant emboîtable.
